(19) Europäisches Patentamt
European Patent Office
Office européen des brevets

(11) **EP 4 451 758 A1**

(12) **EUROPEAN PATENT APPLICATION**
published in accordance with Art. 153(4) EPC

(43) Date of publication:
**23.10.2024 Bulletin 2024/43**

(21) Application number: **22909952.8**

(22) Date of filing: **19.12.2022**

(51) International Patent Classification (IPC):
**H04W 64/00** (2009.01)

(52) Cooperative Patent Classification (CPC):
**G01S 5/00; G07C 9/00; H04W 4/02; H04W 4/021;**
**H04W 64/00; H04W 88/08;** Y02D 30/70

(86) International application number:
**PCT/CN2022/140132**

(87) International publication number:
**WO 2023/116640 (29.06.2023 Gazette 2023/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.12.2021 CN 202111574469**

(71) Applicant: **Beijing Co Wheels Technology Co., Ltd.**
**Beijing 101300 (CN)**

(72) Inventors:
• JI, Zheng
  **Beijing 101300 (CN)**
• ZHANG, Jiaming
  **Beijing 101300 (CN)**
• MENG, Yue
  **Beijing 101300 (CN)**
• NING, Yunpeng
  **Beijing 101300 (CN)**
• LI, Xiuzhang
  **Beijing 101300 (CN)**

(74) Representative: **Regimbeau**
**20, rue de Chazelles**
**75847 Paris Cedex 17 (FR)**

(54) **MOBILE TERMINAL POSITIONING METHOD AND APPARATUS, DEVICE AND STORAGE MEDIUM**

(57)    A mobile terminal positioning method, comprising: acquiring the ranging distances between a plurality of UWB base stations and a mobile terminal in the current period; according to the plurality of ranging distances, determining, from among a plurality of preset areas, a target area where the mobile terminal is located in the current period; and calculating the positional coordinates of the mobile terminal in the current period according to the target area where the mobile terminal is located in the current period, and the ranging distances between the plurality of UWB base stations and the mobile terminal in the current period.

```
┌──────────────────────────────────────────────────┐
│ A ranging distance between each of a plurality of  │ ⌐S101
│ UWB anchors and a mobile terminal in a current     │
│ period is acquired                                 │
└──────────────────────────────────────────────────┘
                        │
                        ▼
┌──────────────────────────────────────────────────┐
│ A target area where the mobile terminal is located │ ⌐S102
│ in the current period is determined from a         │
│ plurality of preset areas according to a plurality │
│ of ranging distances                               │
└──────────────────────────────────────────────────┘
                        │
                        ▼
┌──────────────────────────────────────────────────┐
│ Position coordinates of the mobile terminal in the │ ⌐S103
│ current period are calculated according to the     │
│ target area where the mobile terminal is located   │
│ in the current period and the ranging distance     │
│ between each of the plurality of UWB anchors and   │
│ the mobile terminal in the current period          │
└──────────────────────────────────────────────────┘
```

**FIG. 1**

**Description**

CROSS-REFERENCE TO RELATED APPLICATION

The present application is proposed based upon and claims priority to Chinese patent application No. 202111574469.2 filed on December 21, 2021, the disclosure of which is hereby incorporated by reference in its entirety.

TECHNICAL FIELD

The present disclosure relates to the technical field of positioning, in particular to a method for positioning a mobile terminal, an apparatus, a device and a storage medium.

BACKGROUND

An Ultra WideBand (UWB) technology obtains a ranging distance by propagating narrow pulses at a nanosecond or a microsecond level, the UWB technology has an advantage of high time resolution. At present, the UWB technology has been applied to vehicles to realize positioning of a mobile terminal such as a vehicle key. However, a set height of a UWB anchor implementing the UWB technology may be limited by a height of a vehicle body when the UWB anchor is deployed in a vehicle scenario, and a serious non line-of-sight (NLOS) propagation problem may be present when some UWB anchors communicate with the mobile terminal. Therefore, the corresponding ranging distance may be inaccurate, and position coordinates of the mobile terminal calculated according to the ranging distance may have a serious error relative to actual coordinates.

SUMMARY

To solve the above technical problem, the present disclosure provides a method for positioning a mobile terminal, an apparatus, a device and a storage medium.
In a first aspect, there is provided a method for positioning a mobile terminal in an embodiment of the present disclosure, and the method includes the following operations.
A ranging distance between each of a plurality of UWB anchors and the mobile terminal in a current period is acquired.
A target area where the mobile terminal is located in the current period is determined from a plurality of preset areas according to a plurality of ranging distances.
Position coordinates of the mobile terminal in the current period are calculated according to the target area where the mobile terminal is located in the current period and the ranging distance between each of the plurality of UWB anchors and the mobile terminal in the current period.
Alternatively, the plurality of preset areas are areas determined based on a vehicle, and the plurality of preset areas include an area outside the vehicle and an area inside the vehicle.
Alternatively, the plurality of UWB anchors include six UWB anchors. Two UWB anchors of the six UWB anchors are respectively located on a left side and a right side of a front grille of the vehicle, two UWB anchors of the six UWB anchors are respectively located on a left side and a right side of a tailgate of the vehicle, and two UWB anchors of the six UWB anchors are located in a middle area of a ceiling of the vehicle and are separately set along a length direction of a vehicle body. The area outside the vehicle includes a front area outside the vehicle, a rear area outside the vehicle, a front-left area outside the vehicle, a rear-left area outside the vehicle, a front-right area outside the vehicle and a rear-right area outside the vehicle.
The area inside the vehicle includes a front-left area inside the vehicle, a front-right area inside the vehicle, a rear-left area inside the vehicle and a rear-right area inside the vehicle.
Alternatively, the operation that the target area where the mobile terminal is located in the current period is determined from the plurality of preset areas according to the plurality of ranging distances further includes the following operations.
Boundary demarcation data of a target area where the mobile terminal is located in the previous period are determined according to position coordinates of the mobile terminal in a previous period. The boundary demarcation data include a demarcation distance from each of boundary demarcation points to each of the plurality of UWB anchors.
In response to an absolute value of a first difference value, which is between the demarcation distance from each of the boundary demarcation points to each of the plurality of UWB anchors and a ranging distance corresponding to the each UWB anchor, being greater than a set value, the target area of the mobile terminal in the previous period is determined as the target area of the mobile terminal in the current period.
Alternatively, the boundary demarcation data further includes a second difference value between a reference distance from a direction reference point on one side of each of the boundary demarcation points to each of the plurality of UWB anchors and a demarcation distance from the each boundary demarcation point to the each UWB anchor.

The operation that the target area where the mobile terminal is located in the current period is determined from the plurality of preset areas according to the plurality of ranging distances further includes the following operations.

In response to absolute values of all first difference values of a boundary demarcation point being smaller than the set value, whether a numerical relationship between a first difference value corresponding to the boundary demarcation point and zero is same as a numerical relationship between a second difference value corresponding to the boundary demarcation point and zero is determined.

In response to all numerical relationships being same, a preset area where the direction reference point is located is determined as the target area where the mobile terminal is located in the current period.

In response to at least one numerical relationship being different from any other numerical relationship, a preset area on another side of the boundary demarcation point which does not include the direction reference point is determined as the target area where the mobile terminal is located in the current period.

Alternatively, before determining the boundary demarcation data of the target area where the mobile terminal is located in the previous period, the method further includes the following operations.

A displacement of the mobile terminal in the current period is acquired.

The set value is determined according to the displacement of the mobile terminal in the current period.

Alternatively, the method further includes an operation that ranging distances between each of the plurality of UWB anchors and the mobile terminal in a preset previous duration are acquired. The preset previous duration includes a plurality of periods.

A mean value and a variance of the ranging distances corresponding to each of the plurality of UWB anchors in the preset previous duration are calculated.

At least N mean values respectively corresponding to at least N UWB anchors with smallest variances are selected, and estimated position coordinates of the mobile terminal are calculated, N being an integer greater than or equal to 1.

A target area corresponding to the estimated position coordinates and boundary demarcation data of the target area are determined according to the estimated position coordinates. The boundary demarcation data include a demarcation distance from each of boundary demarcation points to each of the plurality of UWB anchors.

The operation that the target area where the mobile terminal is located in the current period is determined from the plurality of preset areas according to the plurality of ranging distances includes that: the target area of the mobile terminal in the current period is determined according to a demarcation distance from each of the boundary demarcation points to each of the plurality of UWB anchors and a ranging distance corresponding to the each UWB anchor in the current period.

Alternatively, the operation that the position coordinates of the mobile terminal in the current period are determined according to the target area where the mobile terminal is located in the current period and the ranging distance between each of the plurality of UWB anchors and the mobile terminal in the current period includes the following operations.

A confidence corresponding to each of the plurality of UWB anchors in the current period is determined according to the target area where the mobile terminal is located in the current period.

The position coordinates of the mobile terminal in the current period are calculated according to the confidence corresponding to each of the plurality of UWB anchors in the current period and the ranging distance between each of the plurality of UWB anchors and the mobile terminal in the current period.

Alternatively, the operation that the position coordinates of the mobile terminal in the current period are calculated according to the confidence corresponding to each of the plurality of UWB anchors in the current period and the ranging distance between each of the plurality of UWB anchors and the mobile terminal in the current period includes the following operations.

The confidence corresponding to each of the plurality of UWB anchors is multiplied by the ranging distance corresponding to the each UWB anchor in the current period, to obtain a corrected ranging distance from each of the plurality of UWB anchors to the mobile terminal in the current period.

The position coordinates of the mobile terminal in the current period is calculated according to the corrected ranging distance corresponding to each of the plurality of UWB anchors and position coordinates of each of the plurality of UWB anchors.

Alternatively, the method further includes an operation that a displacement of the mobile terminal in the current period is acquired.

Predicted coordinates of the mobile terminal in the current period are calculated according to position coordinates of the mobile terminal in the previous period and the displacement of the mobile terminal in the current period.

The operation that the position coordinates of the mobile terminal in the current period are calculated according to the target area where the mobile terminal is located in the current period and the ranging distance between each of the plurality of UWB anchors and the mobile terminal in the current period includes the following operations.

Measurement coordinates of the mobile terminal in the current period are calculated according to the target area where the mobile terminal is located in the current period and the ranging distance between each of the plurality of UWB anchors and the mobile terminal in the current period.

The measurement coordinates and the predicted coordinates are fused to obtain the position coordinates of the mobile terminal in the current period.

Alternatively, before fusing the measurement coordinates and the predicted coordinates to obtain the position coordinates of the mobile terminal in the current period, the method further includes the following operations.

Whether the measurement coordinates of the mobile terminal in the current period satisfy a set constraint condition is determined. The set constraint condition includes: a height coordinate being within a set height coordinate range, and/or a horizontal coordinate being within a set horizontal coordinate range.

The operation that the measurement coordinates and the predicted coordinates are fused to obtain the position coordinates of the mobile terminal in the current period includes that: in response to the measurement coordinates of the mobile terminal in the current period satisfying the set constraint condition, the operation that the measurement coordinates and the predicted coordinates are fused to obtain the position coordinates of the mobile terminal in the current period is performed.

The method further includes the operation that: in response to the measurement coordinates of the mobile terminal in the current period not satisfying the set constraint condition, the position coordinates of the mobile terminal in the previous period and the predicted coordinates are fused to obtain the position coordinates of the mobile terminal in the current period.

In a second aspect, there is provided an apparatus for positioning a mobile terminal in an embodiment of the present disclosure, and the apparatus includes a ranging distance acquisition unit, a target area determination unit and a position coordinate calculation unit.

The ranging distance acquisition unit is configured to acquire a ranging distance between each of a plurality of UWB anchors and the mobile terminal in a current period.

The target area determination unit is configured to determine, according to a plurality of ranging distances, a target area where the mobile terminal is located in the current period from a plurality of preset areas.

The position coordinate calculation unit is configured to calculate position coordinates of the mobile terminal in the current period according to the target area where the mobile terminal is located in the current period and the ranging distance between each of the plurality of UWB anchors and the mobile terminal in the current period.

In a third aspect, there is provided a computer device in an embodiment of the present disclosure. The computer device includes a memory and a processor. The memory stores a computer program that, when being executed by the processor, causes the processor to perform the method for positioning the mobile terminal as mentioned above.

In a fourth aspect, there is provided a computer-readable storage medium in an embodiment of the present disclosure. The computer-readable storage medium has stored thereon a computer program that, when being executed by a processor, causes the processor to perform the method for positioning the mobile terminal as mentioned above.

In the technical solution of the embodiments of the present disclosure, after acquiring the ranging distance between each of the plurality of UWB anchors and the mobile terminal in the current period, the target area where the mobile terminal is located in the current period is determined according to the plurality of ranging distances, and then the position coordinates of the mobile terminal in the current period are calculated according to the target area and the ranging distance between each of the plurality of UWB anchors and the mobile terminal in the current period. According to the method, the problem of poor positioning accuracy caused by NOLS propagation when at least some of the UWB anchors communicate with the mobile terminal can be overcome, and further, the position coordinates which are calculated based on the ranging distance can be more accurate.

BRIEF DESCRIPTION OF THE DRAWINGS

The accompanying drawings, which are incorporated in and constitute a part of this specification, illustrate embodiments of the present disclosure and, together with the description, serve to explain the principle of the present disclosure.

In order to more clearly describe the embodiments of the present disclosure or technical solutions in the related art, the accompanying drawings required to be used in the description of the embodiments or the related art will be briefly described below. It is apparent that a person having ordinary skill in the art can obtain other figures according to these figures without paying inventive efforts.

FIG. 1 is a flowchart of a method for positioning a mobile terminal provided in some embodiments of the present disclosure.

FIG. 2 is a schematic diagram of a layout of UWB anchors and a division of areas provided in an embodiment of the present disclosure.

FIG. 3 is a flowchart of a method for positioning a mobile terminal provided in some embodiments of the present disclosure.

FIG. 4 is a schematic structural diagram of an apparatus for positioning a mobile terminal provided in some embodiments of the present disclosure.

FIG. 5 is a schematic structural diagram of a computer device provided in an embodiment of the present disclosure.

DETAILED DESCRIPTION

Embodiments of the present disclosure will be described in more detail below with reference to the accompanying drawings. While certain embodiments of the present disclosure are illustrated in the drawings, it should be understood that the present disclosure may be implemented in various forms and should not be construed as being limited to the embodiments set forth herein. On the contrary, these embodiments are provided for a more thorough and complete understanding of the present disclosure. It should be understood that the drawings and embodiments of the present disclosure are for illustration purposes only and are not intended to limit the scope of protection of the present disclosure.

The term "including" and its variations as used herein means open inclusion, that is, "including but not limited to". The phrase "based on" means "at least partially based on". The phrase "an embodiment" denotes "at least one embodiment", the phrase "another embodiment" denotes "at least another one embodiment", and the phrase "some embodiments" denotes "at least some embodiments". Related definitions of other terms will be given in the description below. It should be noted that the concepts of "first" and "second" mentioned in the present disclosure are only for distinguishing different devices, modules or units, and are not for defining the order or interdependence of functions performed by these devices, modules or units.

It should be noted that the quantifiers of "one" and "multiple" mentioned in the present disclosure are schematic and not restrictive, and those skilled in the art should understand that, unless otherwise expressly stated in the context, these quantifiers should be understood as "one or more".

Embodiments of the present disclosure provide a method for positioning a mobile terminal. The method may be applied in application scenarios such as vehicles, smart houses, and the like, to realize positioning of a mobile terminal such as a smart key. The method for positioning the mobile terminal provided by the embodiments of the present disclosure will be explained below by taking a vehicle application scenario as an example.

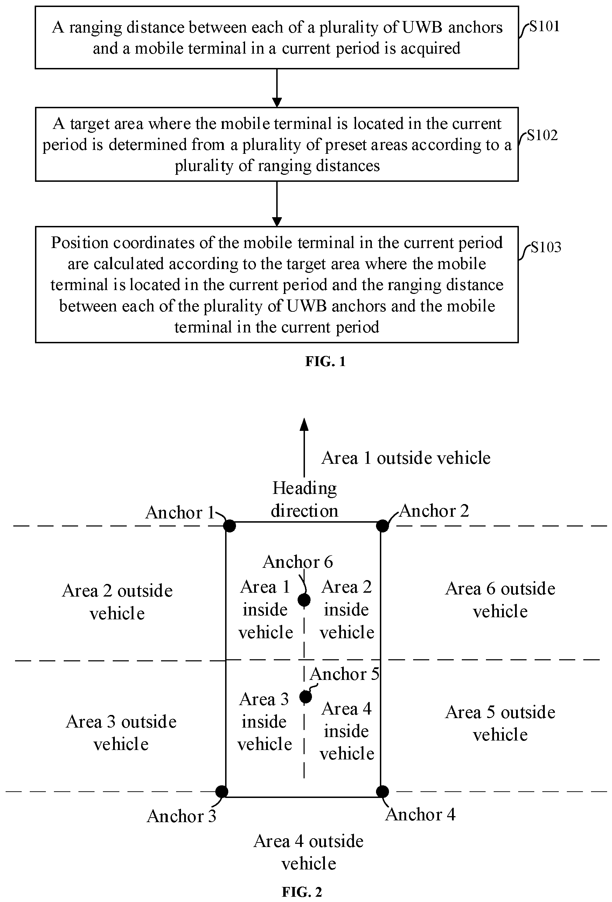

FIG. 1 is a flowchart of a method for positioning a mobile terminal provided in some embodiments of the present disclosure. As illustrated in FIG. 1, the method for positioning the mobile terminal provided in the embodiment of the present disclosure includes the operations S101 to S 103.

It should be noted that the method for positioning the mobile terminal provided in the embodiment of the present disclosure may be executed by a mobile terminal (such as a remote control key of a vehicle) installed with a UWB module, or executed by a vehicle installed with a UWB anchor or an smart house (specifically, executed by a computing device having a data processing capability, such as a head unit (HU) or the like in the vehicle or a central control device in the smart house). The method provided by the embodiments of the present disclosure will be explained below by taking a mobile terminal as an execution subject.

At operation S101, a ranging distance between each of a plurality of UWB anchors and the mobile terminal in a current period is acquired.

In an embodiment of the present disclosure, a UWB module is installed in the mobile terminal. The UWB module periodically performs UWB communication with the plurality of UWB anchors deployed in a vehicle, and determines the ranging distance between the mobile terminal and each of the plurality of UWB anchor based on time stamp information transmitted during a mutual communication.

In an embodiment of the present disclosure, in order to determine the position coordinates of the mobile terminal based on the ranging distance, it is necessary to obtain at least the ranging distance, acquired in the current period, between the mobile terminal and each of at least four UWB anchors, that is, there may be at least four UWB anchors.

In some embodiments of the present disclosure, an asymmetric double side (ADS) ranging algorithm may be employed to determine the ranging distance between the mobile terminal and the UWB anchor. Taking communication with one UWB anchor (UWB anchor A) as an example, the mobile terminal uses the ADS ranging algorithm to determine the ranging distance between the mobile terminal and the UWB anchor A as follows.

Firstly, the UWB module in the mobile terminal sends a Pos1 message to the UWB anchor A, and records a sending time stamp for sending the Pos1 message.

Then, after the UWB anchor A receives the Pos1 message matching the address of the UWB anchor A, the UWB anchor A records a reception time stamp for receiving the Pos1 message. After a period of delay, the UWB anchor A sends a response message RespA to the mobile terminal, and records a sending time stamp for sending RespA. A duration TreplyA from the time for receiving the Pos1 message to the time for sending the response message by the UWB anchor A may be calculated according to the reception time stamp for receiving the Pos1 message and the sending time stamp for sending the RespA.

Then, after the mobile terminal receives the response message RespA from the UWB anchor A, the mobile terminal records a reception time stamp for receiving the response message RespA, and sends a Final message to the UWB anchor A after a period of delay Trepl2A. The Final message includes various pieces of time stamp information recorded when the mobile terminal communicates with the UWB anchor A. A duration Tround1A from the time for sending the Pos1 message to the time for receiving the response message RespA by the terminal mobile may be calculated according to the reception time stamp for receiving the response message RespA and the sending time stamp for sending the Pos1 message.

Then, after the UWB anchor A receives the Final message, the UWB anchor A records a reception time stamp for receiving the Final message. A time duration Tround2A from the time for sending the RespA to the time for receiving the Final message by the UWB anchor A may be calculated according to the reception time stamp for receiving the Final message and the sending time stamp for sending RespA.

After that, the UWB anchor A calculates, according to Tround1A, TreplyA, Treply2A and Tround2A which are calculated based on the various time stamps described above, a time of flight TOFA of a message transmitted between the mobile terminal and the UWB anchor A by adopting the formula: (Tround1A $\times$ Tround2A - TreplyA $\times$ Treply2A) / (Tround1A + TreplyA + Treply2A + Tround2A).

Finally, the UWB anchor A may calculate the ranging distance between the mobile terminal and the UWB anchor A based on the time of flight TOFA and a transmission speed of an electromagnetic signal (that is, the speed of light). The UWB anchor A may send the ranging distance to the mobile terminal after calculating the ranging distance, so that the mobile terminal can obtain the ranging distance between the UWB anchor A and the mobile terminal.

Optionally, in other embodiments of the present disclosure, the UWB anchor A may also send various time stamps to the mobile terminal after receiving the Final message, so that the mobile terminal may calculate the above-mentioned Tround1A, TreplyA, Treply2A, and Tround2A, and calculate the time of flight TOFA according to the above-mentioned four durations by adopting the formula: (Tround1A $\times$ Tround2A - TreplyA $\times$ Treply2A) / (Tround1A + TreplyA + Treply2A + Tround2A). Further, the mobile terminal may calculate the ranging distance between the mobile terminal and the UWB anchor A according to the time of flight TOFA and the transmission speed of the electromagnetic signal.

In an embodiment of the present disclosure, the mobile terminal may communicate with a plurality of UWB anchors in one ranging period. According to the aforementioned method, the embodiment of the present disclosure can also obtain the ranging distances between the mobile terminal and other UWB anchors in the current period.

The above ADS ranging algorithm may compensate a clock offset between the mobile terminal and each of the plurality of UWB anchors, to ensure that the ranging distance has a higher accuracy. Optionally, in another embodiment of the present disclosure, a single side ranging algorithm may be used for determining the ranging distance between the mobile terminal and each of the plurality of UWB anchor.

At operation S102, a target area where the mobile terminal is located in the current period is determined from a plurality of preset areas according to a plurality of ranging distances.

In an embodiment of the present disclosure, after the mobile terminal acquires the plurality of ranging distances, the target area where the mobile terminal is located in the current period is determined by the mobile terminal from the aforementioned plurality of preset areas according to the plurality of ranging distances.

In an embodiment of the present disclosure, the aforementioned preset areas are areas determined based on the vehicle in a case that the application scenario is the vehicle. Specifically, taking an exterior contour of the vehicle cabin as demarcation, the preset areas may include an area inside the vehicle and an area outside the vehicle. In a specific implementation, each of the area inside the vehicle and the area outside the vehicle may be divided into at least one preset sub-area according to deployment of the UWB anchors.

FIG. 2 is a schematic diagram of a layout of UWB anchors and a division of areas provided in an embodiment of the present disclosure. As illustrated in FIG. 2, in an embodiment of the present disclosure, there are six UWB anchors arranged in the vehicle. Two UWB anchors (the UWB anchor 1 and the UWB anchor 2) are respectively located on a left side and a right side of a front grille of the vehicle (specifically located on an upper side of two headlights), two UWB anchors (the UWB anchor 3 and the UWB anchor 4) are respectively located on a left side and a right side of a tailgate of the vehicle (specifically located on an upper side of rear headlights), and two UWB anchors (the UWB anchor 5 and the UWB anchor 6) are located in a middle area of a ceiling of the vehicle and are separately set along a length direction of a vehicle body (specifically, the UWB anchor 5 is located in a central area of the ceiling, and the UWB anchor 6 is located on an upper side of a rear-view mirror which is inside the vehicle).

On basis of the aforementioned manner of UWB anchor layout, before the implementation of the method in the embodiment of the present disclosure, the inventor measures the ranging distance between the mobile terminal and each of the UWB anchors when the mobile terminal is located at a large number of positions, and performs mathematical statistics on the accuracy of the ranging distances, and divides each of the space inside the vehicle and the space outside the vehicle into areas based on the mathematical statistics result.

Specifically, the area outside the vehicle is divided into six sub-areas based on the aforementioned UWB anchor layout manner. The sub-areas outside the vehicle include a front area outside the vehicle, a rear area outside the vehicle, a front-left area outside the vehicle, a rear-left area outside the vehicle, a front-right area outside the vehicle and a rear-right area outside the vehicle, which correspond to the area 1 outside the vehicle, area 4 outside the vehicle, area 2 outside the vehicle, area 3 outside the vehicle, area 6 outside the vehicle and area 5 outside the vehicle in FIG. 2 in sequence. Herein, the front area outside the vehicle and the front-left area outside the vehicle are demarcated by a line connecting the UWB anchor 1 and the UWB anchor 2, and the front area outside the vehicle and the front-right area outside the vehicle are also demarcated by this line. The front-left area outside the vehicle and the rear-left area outside the vehicle are demarcated by a plane where a vehicle B-pillar is located, and the front-right area outside the vehicle and the rear-right area outside the vehicle are also demarcated by this plane. The rear area outside the vehicle and the rear-left area outside the vehicle are demarcated by a line connecting the UWB anchor 3 and the UWB anchor 4, and the rear area outside the vehicle and the rear-right area outside the vehicle are also demarcated by this line.

The area inside the vehicle is divided into four sub-areas based on the aforementioned UWB anchor layout manner. The sub-areas inside the vehicle include a front-left area inside the vehicle, a front-right area inside the vehicle, a rear-left area inside the vehicle and a rear-right area inside the vehicle, which correspond to the area 1 inside the vehicle, area 2 inside the vehicle, area 3 inside the vehicle, and area 4 inside the vehicle in FIG. 2 in sequence. The area 1 inside the vehicle and the area 2 inside the vehicle are demarcated by a vertical plane where a line connecting the UWB anchor 5 and the UWB anchor 6 is located, and the area 3 inside the vehicle and the area 4 inside the vehicle are also demarcated by this vertical plane. The area 1 inside the vehicle and the area 3 inside the vehicle are demarcated by a plane where the vehicle B-pillar is located, and the area 2 inside the vehicle and the area 4 inside the vehicle are also demarcated by this plane.

Optionally, in other embodiments of the present disclosure, the area inside the vehicle and the area outside the vehicle may be divided by other area division manners when the UWB anchors are deployed in other layout manners.

In an embodiment of the present disclosure, the determination of the target area where the mobile terminal is located in the current period is to determine which divided area, within the area inside the vehicle or area outside the vehicle, the mobile terminal is located in in the current period. The specific method of how to determine the target area where the mobile terminal is located in the current period will be explained in the later text.

At operation S103, position coordinates of the mobile terminal in the current period are calculated according to the target area where the mobile terminal is located in the current period and the ranging distance between each of the plurality of UWB anchors and the mobile terminal in the current period.

After the target area where the mobile terminal is located in the current period is determined, the position coordinates of the mobile terminal in the current period may then be calculated according to the target area and the ranging distance between each of the plurality of UWB anchors and the mobile terminal in the current period.

According to preliminary tests, in an embodiment of the present disclosure, due to influences of a vehicle cabin outline and the layout of devices in the vehicle, when the mobile terminal is located in different target areas, the UWB signal may experience a serious NOLS propagation when the mobile terminal communicates with some UWB anchors, resulting in a larger deviation between the ranging distance and the corresponding actual distance (for example, the specific ranging distance is greater than the actual distance). Therefore, the positioning accuracy of the position coordinates of the mobile terminal calculated based on the ranging distance measured by the UWB anchor is very poor due to the abnormal ranging distance. The UWB anchors that occur NLOS propagations are not same when the mobile terminal is in different target areas.

Accordingly, in the method for positioning the mobile terminal provided in the embodiments of the present disclosure, after acquiring the ranging distance between each of the plurality of UWB anchors and the mobile terminal in the current period, the target area where the mobile terminal is located in the current period is determined according to the plurality of ranging distances. Further, the position coordinates of the mobile terminal in the current period are calculated according to the target area and the ranging distance between each of the plurality of UWB anchors and the mobile terminal in the current period. According to the method, the problem of poor positioning accuracy caused by NOLS propagation when at least some of the UWB anchors communicate with the mobile terminal can be overcome.

In some embodiments of the present disclosure, the operation S103 that the position coordinates of the mobile terminal in the current period are calculated according to the target area where the mobile terminal is located in the current period and the ranging distance between each of the plurality of UWB anchors and the mobile terminal in the current period may specifically include the operations S1031 and S1032.

At operation S1031, a confidence corresponding to each of the plurality of UWB anchors in the current period is determined according to the target area where the mobile terminal is located in the current period.

Before the implementation of the method in the embodiment of the present disclosure, the inventor of the present disclosure measures the ranging distance between the mobile terminal and each of the plurality of UWB anchors when the mobile terminal is located at a large number of positions, and performs mathematical statistics on the accuracy of the ranging distances, and divides each of the space inside the vehicle and the space outside the vehicle into areas based on the mathematical statistics result. Further, the inventor determines the confidence of the raging distance obtained by communication between the mobile terminal and each of the plurality of UWB anchors when the mobile terminal is located in each preset area. Table 1 is a table of a confidence relationship between divided areas and UWB anchors.

Table 1 Table of confidence relationship between divided areas and UWB anchors.

|  | UWB anchor 1 | UWB anchor 2 | UWB anchor 3 | UWB anchor 4 | UWB anchor 5 | UWB anchor 6 |
|---|---|---|---|---|---|---|
| Area 1 outside vehicle | 1.00 | 1.00 | 0.10 | 0.10 | 0.25 | 1.00 |
| Area 2 outside vehicle | 1.00 | 0.10 | 1.00 | 0.10 | 0.25 | 1.00 |
| Area 3 outside vehicle | 1.00 | 0.10 | 1.00 | 0.10 | 1.00 | 0.25 |
| Area 4 outside vehicle | 0.10 | 0.10 | 1.00 | 1.00 | 1.00 | 0.25 |
| Area 5 outside vehicle | 0.10 | 1.00 | 0.10 | 1.00 | 1.00 | 0.25 |
| Area 6 outside vehicle | 0.10 | 1.00 | 0.10 | 1.00 | 1.00 | 0.25 |
| Area 1 inside vehicle | 0.50 | 0.25 | 0.10 | 0.10 | 0.75 | 1.00 |
| Area 2 inside vehicle | 0.25 | 0.50 | 0.10 | 0.10 | 0.75 | 1.00 |
| Area 3 inside vehicle | 0.10 | 0.10 | 0.50 | 0.25 | 1.00 | 0.75 |
| Area 4 inside vehicle | 0.10 | 0.10 | 0.25 | 0.50 | 1.00 | 0.75 |

In an embodiment of the present disclosure, the determination of the confidence corresponding to each of the plurality of UWB anchors according to the target area where the mobile terminal is located in the current period is to determine the confidence corresponding to each of the plurality of UWB anchors by querying the aforementioned relationship table.

At operation S1032, the position coordinates of the mobile terminal in the current period are calculated according to the confidence corresponding to each of the plurality of UWB anchors in the current period and the ranging distance between each of the plurality of UWB anchors and the mobile terminal in the current period.

In some embodiments of the present disclosure, the operation S1032 may include operations S1032A and S1032B.

At operation S1032A, the confidence corresponding to each of the plurality of UWB anchors is multiplied by the ranging distance corresponding to the each UWB anchor in the current period, to obtain a corrected ranging distance from each of the plurality of UWB anchors to the mobile terminal in the current period.

At operation S1032B, the position coordinates of the mobile terminal in the current period are calculated according to the corrected ranging distance corresponding to each of the plurality of UWB anchors and position coordinates of each of the plurality of UWB anchors.

In a specific embodiment, the position coordinates of the mobile terminal in the current period may be calculated by using a trilateration-least square fitting solution method. It is assumed that the target area is the area 1 outside the vehicle, the position coordinates of the UWB anchor 1 is $(x_1, y_1, z_1)$, the raging distance from the mobile terminal to the UWB anchor 1 is $d_1$; the position coordinates of the UWB anchor 2 is $(x_2, y_2, z_2)$; the raging distance from the mobile terminal to the UWB anchor 3 is $d_3$, the position coordinates of the UWB anchor 3 is $(x_3, y_3, z_3)$; the raging distance from the mobile terminal to the UWB anchor 4 is $d_4$, the position coordinates of the UWB anchor 4 is $(x_4, y_4, z_4)$; the position coordinates of the UWB anchor 5 is $(x_5, y_5, z_5)$, the raging distance from the mobile terminal to the UWB anchor 5 is $d_5$; the position coordinates of the UWB anchor 6 is $(x_6, y_6, z_6)$, the raging distance from the mobile terminal to the UWB anchor 6 is $d_6$, and the confidences corresponding to the UWB anchors 1 to 6 queried according to Table 2 are 1, 1, 0.1, 0.1, 0.25, and 1, respectively. Then, the following set of equations can be constructed.

$$\begin{cases} (x_1 - x)^2 + (y_1 - y)^2 + (z_1 - z)^2 = (1 \times d_1)^2 \\ (x_2 - x)^2 + (y_2 - y)^2 + (z_2 - z)^2 = (1 \times d_2)^2 \\ (x_3 - x)^2 + (y_3 - y)^2 + (z_3 - z)^2 = (0.1 \times d_3)^2 \\ (x_4 - x)^2 + (y_4 - y)^2 + (z_4 - z)^2 = (0.1 \times d_4)^2 \\ (x_5 - x)^2 + (y_5 - y)^2 + (z_5 - z)^2 = (0.25 \times d_5)^2 \\ (x_6 - x)^2 + (y_6 - y)^2 + (z_6 - z)^2 = (1 \times d_6)^2 \end{cases}$$

The least square method is adopted to solve the aforementioned set of equations, to obtain the measurement coordinates *(x, y, z)* of the mobile terminal in the current period.

Optionally, in other embodiments of the present disclosure, measurement coordinates may be calculated based on the ranging distance between each of the UWB anchors and the mobile terminal, and the confidence of the target area corresponding to each of the UWB anchors in other ways. For example, in other embodiments of the present disclosure, in a case that the target area is the area 1 outside the vehicle, the following set of equations can be constructed according to the aforementioned ranging distances and confidences, and the set of equations may be solved by using the least square method to obtain the measurement coordinates *(x, y,* z)in the current period.

$$\begin{cases} (x_1 - x)^2 + (y_1 - y)^2 + (z_1 - z)^2 = 1 \times d_1^2 \\ (x_2 - x)^2 + (y_2 - y)^2 + (z_2 - z)^2 = 1 \times d_2^2 \\ (x_3 - x)^2 + (y_3 - y)^2 + (z_3 - z)^2 = 0.1 \times d_3^2 \\ (x_4 - x)^2 + (y_4 - y)^2 + (z_4 - z)^2 = 0.1 \times d_4^2 \\ (x_5 - x)^2 + (y_5 - y)^2 + (z_5 - z)^2 = 0.25 \times d_5^2 \\ (x_6 - x)^2 + (y_6 - y)^2 + (z_6 - z)^2 = (1 \times d_6)^2 \end{cases}$$

According to transmission characteristics of the UWB signal, the propagation distance of the UWB signal can be relatively large compared to a distance of a straight-line propagation if the UWB signal experienced the NOLS propagation. The more serious the NOLS propagation occurred in the UWB signal is, the lower the confidence of the corresponding ranging distance is. The corrected ranging distance is obtained by correcting the ranging distance through using the confidence, and then the corrected ranging distance is used for calculating the measurement coordinates, in such way, the accuracy of calculation of the measurement coordinates can be improved.

As described above, at operation S102 of the embodiments of the present disclosure, the target area where the mobile terminal is located in the current period needs to be determined according to a plurality of ranging distances. In some embodiments of the present disclosure, the operation that the target area where the mobile terminal is located in the current period is determined according to the plurality of ranging distances may include operations S1021 to S 1026.

At operation S1021, boundary demarcation data of an area where the mobile terminal is located in a previous period is determined according to position coordinates of the mobile terminal in the previous period.

Before the method for positioning in the embodiments of the present disclosure is implemented, sufficient demarcation works are carried out on boundaries of each area, to obtain boundary demarcation data of all boundaries. The boundary demarcation data include a demarcation distance from each of boundary demarcation points to each of the plurality of UWB anchors.

In an embodiment of the present disclosure, the operation that the mobile terminal determines the boundary demarcation data of the area where the mobile terminal is located in the previous period according to the position coordinates of the mobile terminal in the previous period includes the following operations: firstly, the area where the mobile terminal is located in the previous period is determined according to the position coordinates of the mobile terminal in the previous period; and then the corresponding demarcation data are selected among all the boundary demarcation data according to the area where the mobile terminal is located in the previous period as the boundary demarcation data of the area where the mobile terminal is located in the previous period.

At operation S1022, a numerical relationship between an absolute value of a first difference value, which is between the ranging distance from the mobile terminal to each of all UWB anchors in the current period and a demarcation distance from each of the boundary demarcation points to the each UWB anchor, and a set value is determined.

If the first difference value, which is between the ranging distance from the mobile terminal to any of the plurality of UWB anchors in the current period and the demarcation distance from a boundary demarcation point to the corresponding UWB anchor, is greater than the set value, the operation S1023 is performed.

However, if the first difference value, which is between the ranging distance from the mobile terminal to each of the plurality of UWB anchors in the current period and the demarcation distance from a certain boundary demarcation point to the corresponding UWB anchor, is smaller than the set value, the operation S1024 is performed.

At operation S1023, the area where the mobile terminal is located in the previous period is determined as the target area.

In an embodiment of the present disclosure, if the difference value, which is between the ranging distance from the mobile terminal to any of the plurality of UWB anchors in the current period and the demarcation distance from each of the boundary demarcation points to the corresponding UWB anchor, is greater than the set value, it represents that the mobile terminal in the current period does not move near an area boundary of the area where the mobile terminal is located in the previous period, and further represents that the mobile terminal in the current period is still located in the area where the mobile terminal is located in the previous period. Therefore, the area where the mobile terminal is located in the previous period is determined as the target area where the mobile terminal is located in the current period.

At operation S1024, whether a numerical relationship between a first difference value corresponding to a boundary demarcation point and zero is the same as a numerical relationship between a second difference value corresponding to the boundary demarcation point and zero is determined. If the numerical relationship between the first difference value corresponding to the boundary demarcation point and zero is the same as the numerical relationship between the second difference value corresponding to the boundary demarcation point and zero, operation S1025 is performed; if the numerical relationship between the first difference value corresponding to the boundary demarcation point and zero is not same as the numerical relationship between the second difference value corresponding to the boundary demarcation point and zero, operation S1026 is performed.

In some embodiments of the present disclosure, in addition to the ranging distance from each of the boundary demarcation points to each of the plurality of UWB anchors, the boundary demarcation data further include a second difference value between a reference distance from a direction reference point on one side of each of the boundary demarcation points to each of the plurality of UWB anchors and a demarcation distance from the each boundary demarcation point to the each UWB anchor.

The determination of whether the numerical relationship between the first difference value and zero is the same as the numerical relationship between a second difference value and zero is to determine whether both the first difference value and the second difference value are positive values or negative values.

If the difference value, which is between the ranging distance from the mobile terminal to each of the plurality of UWB anchors in the current period and the demarcation distance from a certain boundary demarcation point to the each UWB anchor, is smaller than the set value, it represents that the mobile terminal is close to the aforementioned certain boundary demarcation point. At this time, the mobile terminal may be located in the area where the mobile terminal is located in the previous period, or may move across the boundary demarcation point to another adjacent area, that is, at this time, the mobile terminal may have crossed the boundary. In order to ensure that the determination of the position of the mobile terminal at the aforementioned certain boundary demarcation point is more accurate, the operation S1024 is performed in the embodiment of the present disclosure.

As described above, the first difference value is a difference value between the ranging distance from the mobile terminal to a UWB anchor and a demarcation distance from a boundary demarcation point to the UWB anchor; and the second difference value is a difference value between a reference distance from a direction reference point on one side of a boundary demarcation point to a UWB anchor and a demarcation distance from the boundary demarcation point to the UWB anchor. If the numerical relationship between the first difference value and zero is the same as the numerical relationship between the second difference value and zero, it represents that the mobile terminal is located in the same area as the direction reference point in the current period, so the operation S1025 is performed. If the numerical relationship between the first difference value and zero is different from the numerical relationship between the second difference value and zero, it represents that the mobile terminal is not located in the same area as the direction reference point in the current period. That is, the mobile terminal is located in an area on another side of the aforementioned certain boundary demarcation point in the current period, so the operation S1026 is performed.

At operation S1025, the area where the direction reference point is located is determined as the target area.

At operation S1026, the area on another side of the boundary demarcation point which does not include the direction reference point is determined as the target area.

Alternatively, in some embodiments of the present disclosure, the mobile terminal may also perform operations S1027 and S1028 before performing the aforementioned operation S1021.

At operation S1027, a displacement of the mobile terminal in the current period is acquired.

In an embodiment of the present disclosure, the mobile terminal may obtain a velocity of the mobile terminal in the current period by integrating a motion acceleration output by an inertial measurement unit (IMU). In a specific implementation, the velocity of the mobile terminal in the current period may be an average velocity or an instantaneous velocity at any time point in the current period. The displacement of the mobile terminal in the current period may be determined through the integral calculation after the mobile terminal determines the velocity in the current period and a time length of the period.

At operation S1028, the set value is determined according to the displacement of the mobile terminal in the current period.

In an embodiment of the present disclosure, the foregoing set value may be determined based on a movement distance. For example, after the movement distance is determined, the movement distance may be determined as the set value directly, or the movement distance is multiplied by a weight value to obtain the set value.

As described above, in some embodiments of the present disclosure, the mobile terminal needs to determine the target area where the mobile terminal is located in the previous period according to the position coordinates of the mobile terminal in the previous period, and to determine the target area where the mobile terminal is located in the current period according to the target area where the mobile terminal is located in the previous period.

In other embodiments of the present disclosure, the mobile terminal may also determine the target area where the mobile terminal is located in the current period in other ways.

In some embodiments of the present disclosure, the method for positioning the mobile terminal may also include operations S104 to S106 before the operation S102 is performed.

At operation S104, ranging distances between each of the plurality of UWB anchors and the mobile terminal in a preset previous duration are acquired.

The preset previous duration is a preset duration before the current period, and the preset previous duration includes a plurality of UWB communication periods. In an embodiment of the present disclosure, the preset previous duration is set to 1s and the UWB communication period is 50 ms, then the preset previous duration includes 20 UWB communication periods.

In an embodiment of the present disclosure, the mobile terminal may determine the ranging distances between the mobile terminal and each of the plurality of UWB anchors preset in the preset previous duration according to the ADS ranging algorithm in the preceding operation S101, or may determine the ranging distances between the mobile terminal and each of the plurality of UWB anchors in the preset previous duration by using the single ranging algorithm, which will not be elaborated herein again.

At operation S105, a mean value and a variance of the ranging distances corresponding to each of the plurality of UWB anchors in the preset previous duration are calculated.

In an embodiment of the present disclosure, after obtaining a plurality of ranging distances corresponding to each of the plurality of UWB anchor in the preset previous duration, the mobile terminal calculates the mean value and variance based on the ranging distances corresponding to each of the plurality of UWB anchor.

For example, 20 ranging distances $d_1^1$ to $d_1^{20}$ are obtained for the UWB anchor 1 as described above, and the obtained mean value corresponding to the UWB anchor 1 may be $\bar{d}_1 = \frac{d_1^1 + d_1^2 + \cdots + d_1^{20}}{20}$ , and the corresponding variance may be $\sigma_1^2 = \frac{\sum_{i=1}^{20}\left(d_1^i - \bar{d}_1\right)^2}{20}$ . Similarly, the mean value corresponding to the UWB anchor 2 is $\bar{d}_2 = \frac{d_2^1 + d_2^2 + \cdots + d_2^{20}}{20}$ , and the variance is $\sigma_2^2 = \frac{\sum_{i=1}^{20}\left(d_2^i - \bar{d}_2\right)^2}{20}$ .

At operation S106, at least N mean values respectively corresponding to at least N UWB anchors with smallest variances are selected, and estimated position coordinates of the mobile terminal are calculated.

The mobile terminal compares the variances corresponding to the plurality of UWB anchors to determine at least N UWB anchors with the smallest variances after calculating the mean value and variance of the measurement distances corresponding to each of the plurality of UWB anchors in the preset previous duration, and calculates the estimated position coordinates of the mobile terminal based on the mean values corresponding to the aforementioned UWB anchors, where N is at least 1, preferably, N is at least 4.

A small variance of the ranging distance may indicate a small change of the ranging distance between the mobile terminal and the corresponding UWB anchor in the preset previous duration, which represents that the possibility of NLOS propagation is small when the mobile terminal communicates with the UWB anchor, thus the credibility of the mean value of the ranging distances corresponding to this UWB anchor used for calculating the estimated position coordinates of the mobile terminal is high.

In an embodiment of the present disclosure, the mobile terminal selects the mean values of the ranging distances corresponding to 4 UWB anchors with smallest variances, and calculates the estimated position coordinates of the mobile terminal. In another embodiment of the present disclosure, the mobile terminal may select the mean value of the ranging distances corresponding to a UWB anchor with a variance smaller than a set threshold, and calculates the estimated position coordinates of the mobile terminal.

At operation S107, a target area corresponding to the estimated position coordinates and boundary demarcation data of the target area are determined according to the estimated position coordinates. The boundary demarcation data include a demarcation distance from each of boundary demarcation points to each of the plurality of UWB anchors.

The preset area may be determined according to the estimated position coordinates after the estimated position coordinates are determined, and the boundary demarcation data of the preset area may be determined. Subsequently, the operation S102 that the target area where the mobile terminal is located in the current period is determined from the plurality of preset areas according to a plurality of ranging distances may be performed. Specifically, the operation S 102 includes an operation S1029.

At operation S1029, the target area of the mobile terminal in the current period is determined according to a demarcation distance from each of the boundary demarcation points to each of the plurality of UWB anchors and a ranging distance corresponding to the each UWB anchor in the current period.

In a specific implementation, the operation S1029 may include operations S1029A to S1029E.

At operation S1029A, a numerical relationship between an absolute value of a first difference value, which is between the ranging distance from the mobile terminal to each of all UWB anchors in the current period and a demarcation distance from each of the boundary demarcation points to the each UWB anchor, and a set value is determined.

If the first difference value, which is between the ranging distance from the mobile terminal to any of the plurality of UWB anchors in the current period and the demarcation distance from a boundary demarcation point to the corresponding UWB anchor, is greater than the set value, the operation S1029B is performed.

However, if the first difference value, which is between the ranging distance from the mobile terminal to each of the plurality of UWB anchors in the current period and the demarcation distance from a certain boundary demarcation point to the corresponding UWB anchor, is smaller than the set value, the operation S1029BC is performed.

At operation S1029B, the preset area corresponding to the estimated position coordinates is determined as the target area.

In an embodiment of the present disclosure, if the difference value, which is between the ranging distance from the mobile terminal to any of the plurality of UWB anchors in the current period and the demarcation distance from each of the boundary demarcation points to the corresponding UWB anchor, is greater than the set value, it represents that the mobile terminal in the current period does not move near an area boundary of the preset area where the estimated position coordinates are located, and further represents that the mobile terminal in the current period is still located in the preset area where the estimated position coordinates are located. Therefore, the preset area where the estimated position coordinates are located is determined as the target area where the mobile terminal is located in the current period.

At operation S1029C, whether a numerical relationship between a first difference value corresponding to a boundary demarcation point and zero is the same as a numerical relationship between a second difference value corresponding to the boundary demarcation point and zero is determined. If the numerical relationship between the first difference value corresponding to the boundary demarcation point and zero is the same as the numerical relationship between the second difference value corresponding to the boundary demarcation point and zero, operation S1029D is performed; if the numerical relationship between the first difference value corresponding to the boundary demarcation point and zero is not same as the numerical relationship between the second difference value corresponding to the boundary demarcation point and zero, operation S1029E is performed.

In some embodiments of the present disclosure, in addition to the ranging distance from each of the boundary demarcation points to each of the plurality of UWB anchors, the boundary demarcation data further includes a second difference value between a reference distance from a direction reference point on one side of each of the boundary demarcation points to each of the plurality of UWB anchors and a demarcation distance from the each boundary demarcation point to the each UWB anchor.

The determination of whether the numerical relationship between the first difference value and zero is the same as the numerical relationship between a second difference value and zero is to determine whether both the first difference value and the second difference value are positive values or negative values.

If the difference value, which is between the ranging distance from the mobile terminal to each of the plurality of UWB anchors in the current period and the demarcation distance from a certain boundary demarcation point to the each UWB anchor, is smaller than the set value, it is determined that the mobile terminal is close to the aforementioned certain boundary demarcation point. At this time, the mobile terminal may be located in the area where the mobile terminal is located in the previous period, or may move across the boundary demarcation point to another adjacent area, that is, at this time, the mobile terminal may have crossed the boundary. In order to ensure that the determination of the position of the mobile terminal at the aforementioned certain boundary demarcation point is more accurate, the operation S1029C is performed in the embodiment of the present disclosure.

If the numerical relationship between the first difference value and zero is the same as the numerical relationship between the second difference value and zero, it represents that the mobile terminal is located in the same area as the direction reference point in the current period, so the operation S1029D is performed. If the numerical relationship between the first difference value and zero is different from the numerical relationship between the second difference value and zero, it represents that the mobile terminal is not located in the same area as the direction reference point in the current period. That is, the mobile terminal is located in an area on another side of the aforementioned certain boundary demarcation point in the current period, so the operation S1029E is performed.

At operation S1029D, the area where the direction reference point is located is determined as the target area.

At operation S1029E, the area on another side of the boundary demarcation point which does not include the direction reference point is determined as the target area.

In a specific implementation, the aforementioned method may be used for determining the target area when the mobile terminal has just established a connection with a UWB anchor, or the aforementioned method may be used for determining the target area at any period.

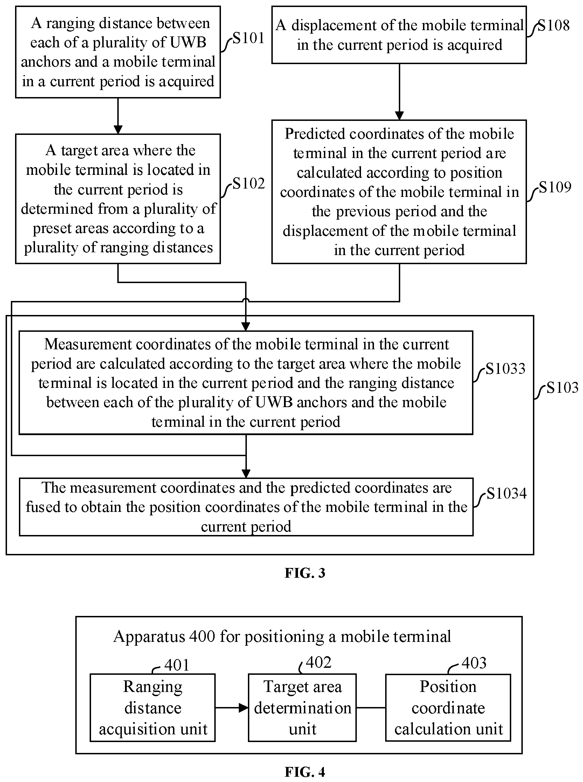

FIG. 3 is a flowchart of a method for positioning a mobile terminal provided in some embodiments of the present disclosure. As illustrated in FIG. 3, in some embodiments of the present disclosure, the method for positioning the mobile terminal may include operations S108 and S109 in addition to the aforementioned operations S101 to S103, and correspondingly, the aforementioned operation S103 includes steps S1033 and S1034.

At operation S101, a ranging distance between each of a plurality of UWB anchors and the mobile terminal in a current period is acquired.

At operation S102, a target area where the mobile terminal is located in the current period is determined from a plurality of preset areas according to a plurality of ranging distances.

At operation S108, a displacement of the mobile terminal in the current period is acquired.

In an embodiment of the present disclosure, an IMU is arranged in the mobile terminal, and the displacement of the mobile terminal in the current period may be determined according to an inertial signal output by the IMU.

In practical applications, the IMU generally includes a three-axis accelerometer and a three-axis gyroscope. A moving acceleration of the mobile terminal may be measured by the three-axis accelerometer. Then, a moving velocity of the mobile terminal may be obtained by an integral calculation on the moving acceleration, and the displacement of the mobile terminal may be obtained by the integral calculation on the moving velocity.

In an embodiment of the present disclosure, the IMU arranged in the mobile terminal is a strap-down IMU. The acceleration values in three axes and angular velocity values in three axes measured by the strap-down IMU are relative to a vehicle coordinate system, and the velocity and displacement information of the mobile terminal cannot be obtained by a simple integration. It is necessary to convert the acceleration values under the vehicle coordinate system to acceleration values under a geographical coordinate system where the mobile terminal is located, and then the movement velocity and displacement of the mobile terminal can be calculated according to the converted acceleration values.

At operation S109, predicted coordinates of the mobile terminal in the current period are calculated according to position coordinates of the mobile terminal in the previous period and the displacement of the mobile terminal in the current period.

In an embodiment of the present disclosure, after obtaining the position coordinates of the mobile terminal in the previous period, the predicted coordinates of the mobile terminal in the current period may be calculated by adding the position coordinates of the mobile terminal in the previous period and the position coordinates of the mobile terminal in the current period.

At operation S1033, measurement coordinates of the mobile terminal in the current period are calculated according to the target area where the mobile terminal is located in the current period and the ranging distance between each of the plurality of UWB anchors and the mobile terminal in the current period.

In an embodiment of the present disclosure, the measurement coordinates of the mobile terminal in the current period may be calculated according to the target area where the mobile terminal is located in the current period and the ranging distance between each of the plurality of UWB anchors and the mobile terminal in the current period by using the method of the aforementioned operations S1031 and S 1032.

At operation S1034, the measurement coordinates and the predicted coordinates are fused to obtain the position coordinates of the mobile terminal in the current period.

In an embodiment of the present disclosure, the movement of the mobile terminal has a nonlinear characteristic. In order to adapt to the aforementioned nonlinear characteristic, the measurement coordinates and predicted coordinates may be fused by using, for example, a nonlinear Kalman filtering method or a particle filtering method, to obtain the position coordinates of the mobile terminal in the current period. Specifically, the nonlinear Kalman filtering method may be specifically an Extended Kalman Filter (EKF) method or an Unscented Kalman Filter (UKF) method. The EKF method is a method of linear approximation by a stochastic nonlinear discrete system, and the UKF method is a Kalman filtering method for processing the problem in a nonlinear system by using an unscented transform.

Fusion of the measurement coordinates and the predicted coordinates by using the EKF method to obtain the position coordinates of the mobile terminal in the current period in the embodiment of the present disclosure is illustrated in the followings.

Based on experience, the system for positioning the mobile terminal provided in the embodiments of the present disclosure is a uniformly secure, measurable and controllable non-linear system.

The nonlinear system may predict predictive coordinates of the mobile terminal at the next time point by using a state equation, and the displacement of the current period plays a role in driving the state equation. Because the IMU has a certain amount of noises, the prediction of the velocity of the mobile terminal, displacement and other states in a long-term accumulation may lead to serious cumulative errors, so the state equation may only provide the state estimation in a relatively short period. In an embodiment, the state equation can be simplified as: $\dot{x} = f(x) + w(t)$, w(t): $N(0, Q)$.

The nonlinear system may use a measurement equation which directly or indirectly describes the measurement model through measurement coordinates, and correct errors generated in a deduction process of the state equation. In an embodiments of the present disclosure, the measurement equation may be simplified as $\dot{z} = h(x) + v(t)$, v(t): $N(0, R)$.

Assuming that the state x(t) at the time point t is known, and selected as $\begin{cases} X^*(t) = f(X^*(t-1)) \\ Z^*(t) = h(X^*(t)) \end{cases}$.

The above two equations are subtracted from state equation and the measurement equation of the model, and then the higher-order terms are omitted by using Taylor series expansion to obtain: $\begin{cases} \delta\dot{X}(t) = F(t)\delta X(t) + w(t) \\ \delta z = H(t)\delta X(t) + v(t) \end{cases}$,

where $F(t) = \frac{\partial f}{\partial x}\Big|_{x^*}, H(t) = \frac{\partial h}{\partial x}\Big|_x$.

According to discretization formulas $A = \begin{bmatrix} -F & Q \\ 0 & F^T \end{bmatrix} T$ and $e^A = \begin{bmatrix} \cdots & F_d^{-1}Q_d \\ 0 & F_d^T \end{bmatrix}$, $F_d$ is denoted as $\Phi_{k/k-1}$, $Q_d$ is denoted as $Q_k$, then the state equation after linearization, that is, discretization, may be written as $X_{k/k-1} = \Phi_{k/k-1}X_{k-1} + Q_k$.

After iterative estimation is performed by applying the five formulas of Kalman filtering, one-step prediction of the state is $\hat{X}_{k/k-1} = \Phi_{k/k-1}X_{k-1}$, the predicted mean square error is $P_{k/k-1} = \Phi_{k/k-1}P_{k-1}\Phi_{k/k-1}^T + Q_{k-1}$, the fusion weight of the measurement value is calculated as $K_k = \Phi_{k/k-1}H_k^T\big[H_k\Phi_{k/k-1}H_k^T + R_k\big]^{-1}$, the fused measurement value is $\hat{X}_k = \hat{X}_{k/k-1} + K_k(z_k - H_kX_{k/k-1})$, and the estimated mean square error is $P_k = (I - K_kH_k)P_{k/k-1}$.

In an embodiment of the present disclosure, the operation that the measurement coordinates and the predicted coordinates are fused to obtain the position coordinates of the mobile terminal in the current period is to calculate the position coordinates in the current period $\hat{X}_k$ by applying $\hat{X}_k = \hat{X}_{k/k-1} + K_k(z_k - H_kX_{k/k-1})$, where $\hat{X}_{k/k-1}$ are the predicted coordinates, $z_k$ are the measurement coordinates, and the Kalman gain is $K_k$.

In the embodiment of the present disclosure, the predicted coordinates of the mobile terminal in the current period are calculated based on the position coordinates of the mobile terminal in the previous period and the displacement in the current period, and the measurement coordinates and the predicted coordinates are fused. The result of an attitude calculation of the IMU may be used for correction of the measurement result, thereby weakening the positioning distortion caused by gross distance errors of the measurement coordinates, and optimizing the positioning result. In some embodiments of the present disclosure, the mobile terminal may also perform the operation S1035 after calculating the measurement coordinates in the current period by performing the operation S1033.

At operation S1035, whether the measurement coordinates of the mobile terminal in the current period satisfy a set constraint condition is determined. If the preset constraint condition is satisfied, the aforementioned operation S1034 is performed; if the preset constraint condition is not satisfied, the operation S1036 is performed.

In a specific implementation of the present disclosure, the calculated measurement coordinates may be contrary to the actual situations. For example, a height coordinate among the calculated measurement coordinates may be smaller than the ground height, or a coordinate in the horizontal direction may exceed a communication radius of the UWB. If the aforementioned measurement coordinates that are contrary to the actual situations are used for calculating the coordinates of the mobile terminal at the current position, huge errors may be introduced.

In order to avoid introducing measurement coordinates that are contrary to the actual situations, in some embodiments of the present disclosure, whether the measurement coordinates satisfy the set constraint condition may be determined after obtaining the measurement coordinates of the mobile terminal in the current period. The aforementioned set constraint condition is a constraint condition for determining whether the measurement coordinates are reasonable.

In some embodiments of the present disclosure, the set constraint condition includes a set height coordinate range and a set horizontal coordinate range. The set height coordinate range is a range representing possible height coordinates of the mobile terminal, and the set horizontal coordinate range is a range representing possible horizontal coordinates of the mobile terminal.

In the case that the set constraint condition includes the set height coordinate range and the set horizontal coordinate range, the aforementioned operation S1035 may include the operation S1035A.

At operation S1035A, it is determined whether a height coordinate in the measurement coordinates of the mobile terminal in the current period satisfies the set height coordinate range, and/or whether a horizontal coordinate in the measurement coordinates of the mobile terminal in the current period is in the horizontal coordinate range.

At operation S 1036, the position coordinates of the mobile terminal in the previous period and the predicted coordinates are fused to obtain the position coordinates of the mobile terminal in the current period.

If the measurement coordinates of the mobile terminal in the current period do not satisfy the set constraint condition, it represents that the measurement coordinates of the mobile terminal in the current period are not credible, thus the position coordinates of the mobile terminal in the previous period, instead of the position coordinates of the mobile terminal in the current period, and the predicted coordinates are fused to obtain the position coordinates of the mobile terminal in the current period.

As described above, in the aforementioned embodiments of the present disclosure, there may be six UWB anchors deployed in the vehicle. In other embodiments of the present disclosure, there may be another number of UWB anchors, and the number of target UWB anchors may also be another number. However, the number of UWB anchors should be at least 4, so as to ensure that the measurement coordinates of the mobile terminal can be calculated through at least 4 target UWB anchors.

FIG. 4 is a schematic structural diagram of an apparatus for positioning a mobile terminal provided in some embodiments of the present disclosure. The apparatus 400 for positioning the mobile terminal may be understood as part functional modules of the vehicle controller described above. As illustrated in FIG. 4, the apparatus 400 for positioning the mobile terminal provided by the embodiment of the present disclosure includes a ranging distance acquisition unit 401, a target area determination unit 402 and a position coordinate calculation unit 403.

The ranging distance acquisition unit 401 is configured to acquire a ranging distance between each of a plurality of UWB anchors and the mobile terminal in a current period.

The target area determination unit 402 is configured to determine, according to a plurality of ranging distances, a target area where the mobile terminal is located in the current period from a plurality of preset areas.

The position coordinate calculation unit 403 is configured to calculate position coordinates of the mobile terminal in the current period according to the target area where the mobile terminal is located in the current period and the ranging distance between each of the plurality of UWB anchors and the mobile terminal in the current period.

In some embodiments of the present disclosure, the plurality of preset areas are areas determined based on a vehicle, and the plurality of preset areas include an area outside the vehicle and an area inside the vehicle.

In some embodiments of the present disclosure, the plurality of UWB anchors include six UWB anchors. Two UWB anchors are respectively located on a left side and a right side of a front grille of the vehicle, two UWB anchors are respectively located on a left side and a right side of a tailgate of the vehicle, and two UWB anchors are located in a middle area of a ceiling of the vehicle and are separately set along a length direction of a vehicle body. The area outside the vehicle includes a front area outside the vehicle, a rear area outside the vehicle, a front-left area outside the vehicle, a rear-left area outside the vehicle, a front-right area outside the vehicle and a rear-right area outside the vehicle. The area inside the vehicle includes a front-left area inside the vehicle, a front-right area inside the vehicle, a rear-left area inside the vehicle and a rear-right area inside the vehicle.

In some embodiments of the present disclosure, the target area determination unit includes a boundary demarcation data acquisition sub-unit and a target area determination sub-unit.

The boundary demarcation data acquisition sub-unit is configured to determine boundary demarcation data of a target area where the mobile terminal is located in a previous period according to position coordinates of the mobile terminal in the previous period. The boundary demarcation data include a demarcation distance from each of boundary demarcation points to each of the plurality of UWB anchors.

The target area determination sub-unit is configured to, in response to an absolute value of a first difference value, which is between the demarcation distance from each of the boundary demarcation points to each of the plurality of UWB anchors and a ranging distance corresponding to the each UWB anchor, being greater than a set value, determine the target area of the mobile terminal in the previous period as the target area of the mobile terminal in the current period.

In some embodiments of the present disclosure, the boundary demarcation data further includes a second difference value between a reference distance from a direction reference point on one side of each of the boundary demarcation points to each of the plurality of UWB anchors and a demarcation distance from the each boundary demarcation point to the each UWB anchor. The target area determination sub-unit is further configured to: in response to absolute values of all first difference values of a boundary demarcation point being smaller than the set value, determine whether a numerical relationship between a first difference value corresponding to the boundary demarcation point and zero is same as a numerical relationship between a second difference value corresponding to the boundary demarcation point and zero; in response to all numerical relationships being same, determine a preset area where the direction reference point is located as the target area where the mobile terminal is located in the current period; in response to at least one numerical relationship being different from any other numerical relationship, determine a preset area on another side of the boundary demarcation point which does not include the direction reference point as the target area where the mobile terminal is located in the current period.

In some embodiments of the present disclosure, the apparatus for positioning the mobile terminal further includes a displacement acquisition unit and a set value determination unit. The displacement acquisition unit is configured to acquire a displacement of the mobile terminal in the current period. The set value determination unit is configured to determine the set value according to the displacement of the mobile terminal in the current period.

In some embodiments of the present disclosure, the apparatus for positioning the mobile terminal further includes an initial ranging distance acquisition unit, a mean value and variance calculation unit and an estimated position coordinates calculation unit.

The initial ranging distance acquisition unit is configured to acquire ranging distances between each of the plurality of UWB anchors and the mobile terminal in a preset previous duration. The preset previous duration includes a plurality of periods.

The mean value and variance calculation unit is configured to calculate a mean value and a variance of the ranging distances corresponding to each of the plurality of UWB anchors in the preset previous duration.

The estimated position coordinates calculation unit is configured to select at least N mean values respectively corresponding to at least N UWB anchors with smallest variances and calculate estimated position coordinates of the mobile terminal; and determine a preset area corresponding to the estimated position coordinates and boundary demarcation data of the preset area according to the estimated position coordinates. The boundary demarcation data include a demarcation distance from each of boundary demarcation points to each of the plurality of UWB anchors.

Correspondingly, the target area determination unit 402 is configured to determine the target area of the mobile terminal in the current period according to a demarcation distance from each of the boundary demarcation points to each of the plurality of UWB anchors and a ranging distance corresponding to the each UWB anchor in the current period.

In some embodiments of the present disclosure, the target area determination unit includes a confidence determination sub-unit and a position coordinate calculation sub-unit.

The confidence determination sub-unit is configured to determine a confidence corresponding to each of the plurality of UWB anchors in the current period according to the target area where the mobile terminal is located in the current period. The position coordinate calculation sub-unit is configured to calculate the position coordinates of the mobile terminal in the current period according to the confidence corresponding to each of the plurality of UWB anchors in the current period and the ranging distance between each of the plurality of UWB anchors and the mobile terminal in the current period.

In some embodiments of the present disclosure, the position coordinate calculation sub-unit is configured to: multiply the confidence corresponding to each of the plurality of UWB anchors by the ranging distance corresponding to the each UWB anchor in the current period, to obtain a corrected ranging distance from each of the plurality of UWB anchors to the mobile terminal in the current period; and calculate the position coordinates of the mobile terminal in the current period according to the corrected ranging distance corresponding to each of the plurality of UWB anchors and position coordinates of each of the plurality of UWB anchors.

In some embodiments of the present disclosure, the apparatus further includes a displacement acquisition unit and a predicted coordinate calculation unit. The displacement acquisition unit is configured to acquire a displacement of the mobile terminal in the current period. The predicted coordinate calculation unit is configured to calculate predicted coordinates of the mobile terminal in the current period according to position coordinates of the mobile terminal in the previous period and the displacement of the mobile terminal in the current period.

Correspondingly, the position coordinate calculation unit includes a measurement coordinate calculation sub-unit and a fusion sub-unit. The measurement coordinate calculation sub-unit is configured to calculate position coordinates of the mobile terminal in the current period according to the target area where the mobile terminal is located in the current period and the ranging distance between each of the plurality of UWB anchors and the mobile terminal in the current period. The fusion sub-unit is configured to fuse the measurement coordinates and the predicted coordinates to obtain the position coordinates of the mobile terminal in the current period.

In some embodiments of the present disclosure, the apparatus for positioning the mobile terminal further includes a constraint determination unit. The constraint determination unit is configured to determine whether the measurement coordinates of the mobile terminal in the current period satisfy a set constraint condition. The set constraint condition includes: whether a height coordinate is within a set height coordinate range, and/or whether a horizontal coordinate is within a set horizontal coordinate range. In response to the constraint determination unit determining that the measurement coordinates of the mobile terminal in the current period satisfy the set constraint condition, the fusion sub-unit is configured to fuse the measurement coordinates and the predicted coordinates to obtain the position coordinates of the mobile terminal in the current period.

In some embodiments of the present disclosure, the fusion sub-unit is configured to: in response to the measurement coordinates of the mobile terminal in the current period not satisfying the set constraint condition, fuse the position coordinates of the mobile terminal in the previous period and the predicted coordinates to obtain the position coordinates of the mobile terminal in the current period.

In some embodiments of the present disclosure, the fusion sub-unit is configured to fuse the measurement coordinates and the predicted coordinates by using a nonlinear Kalman filtering method or a particle filtering method to obtain the position coordinates of the mobile terminal in the current period.

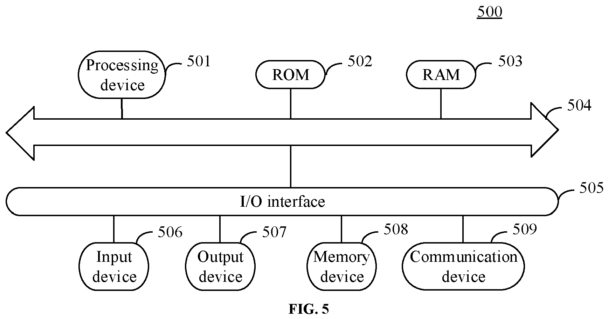

FIG. 5 is a schematic structural diagram of a computer device provided in an embodiment of the present disclosure. Specifically, with reference to FIG. 5 below, a schematic structural diagram of a computer device 500 adapted for implementing in embodiments of the present disclosure. The computer device illustrated in FIG. 5 is merely an example and should not impose any limitation on the functionality and scope of use of embodiments of the present disclosure.

As illustrated in FIG. 5, the computer device 500 may include a processing device (for example, a central processing unit, a graphics processing unit, and etc.) 501 which may perform various appropriate actions and processes in accordance with a program stored in a read-only memory (ROM) 502 or a program loaded from a memory device 508 into a random access memory (RAM) 503. Various programs and data necessary for operations of the computer device 500 are also stored in RAM 503. The processing device 501, ROM 502, and the 503 are connected to each other via a bus 504. The input/output (I/O) interface 505 is also connected to the bus 504.

Typically, the following devices may be connected to the I/O interface 505: an input device 506 such as a touch screen, a touch pad, a camera, a microphone, an accelerometer, a gyroscope; an output device 507 such as a liquid crystal display (LCD), a speaker, a vibrator; a memory device 508 such as a magnetic tape, a hard disk; and a communication device 509. The communication device 509 may allow the computer device 500 to communicate with other devices through a wireless or wired manner, to exchange data. Although FIG. 5 illustrates a computer device 500 with various means, it should be understood that it is not required to implement or have all of the devices as illustrated. Alternatively, more or fewer means may be implemented or provided.

In particular, in an embodiment of the present disclosure, the processes described above with reference to the flowchart may be implemented as a computer software program. For example, an embodiment of the present disclosure includes a computer program product including a computer program loaded on a non-transitory computer-readable medium. The computer program includes program codes for executing the method illustrated in the flowchart. In this embodiment, the computer program may be downloaded from the network through the communication device 509 and installed, or from the memory device 508, or from the ROM 502. The above functions described in the method of the embodiment of the present disclosure are performed when the computer program is performed by the processing device 501.

It should be noted that the computer readable medium described above in the present disclosure may be a computer-readable signal medium or a computer-readable storage medium or any combination of these mediums. The computer-readable storage medium may be, but is not limited to, for example, an electrical, magnetic, optical, electromagnetic, infrared, or semiconductor system, apparatus or a device, or any combination thereof. More specific examples of the computer-readable storage medium may include, but are not limited to, an electrical connection with one or more wires, a portable computer disk, a hard disk, an RAM, an ROM, an erasable programmable ROM (EPROM or flash memory), an optical fiber, a portable compact ROM (CD-ROM), an optical memory device, a magnetic memory device, or any suitable combination thereof. In the present disclosure, a computer-readable storage medium may be any tangible medium containing or storing a program that may be used by or in conjunction with a system, apparatus, or device for executing instructions. In the present disclosure, however, the computer-readable signal medium may include a data signal propagated on a baseband or as part of a carrier, in which computer-readable program code is carried. Such propagated data signal may take a variety of forms including but not limited to an electromagnetic signal, an optical signal or any suitable combination thereof. The computer-readable signal medium may also be any computer-readable medium other than a computer-readable storage medium, which may transmit, propagate, or transmit programs for use by or in conjunction with a system, apparatus, or device for executing instructions. Program codes included on the computer-readable medium may be transmitted by using any suitable medium, including but not limited to: a wire, optical cable, radio frequency (RF), etc., or any suitable combination thereof.

In some embodiments, the client, server may communicate with each other by using any currently known or future developed network protocols, such as a Hyper Text Transfer Protocol (HTTP), and may be interconnected with any form or medium of digital data communication (e.g., a communication network). Examples of the communication network may include a local area network (LAN), a wide area network (WAN), a world wide web (e.g., the Internet), and an end-to-end network (e.g., an ad hoc end-to-end network), as well as any currently known or future developed networks.

The computer-readable medium may be included in the aforementioned computer device and may also exist alone and not be assembled into the computer device.

The computer-readable medium carries one or more programs. When the one or more programs are executed by the computer device, the computer device: acquires ranging distance between each of a plurality of UWB anchors and the mobile terminal in a current period; determines according to a plurality of ranging distances, a target area where the mobile terminal is located in the current period from a plurality of preset areas; and calculates position coordinates of the mobile terminal in the current period according to the target area where the mobile terminal is located in the current period and the ranging distance between each of the plurality of UWB anchors and the mobile terminal in the current period.

Computer program code for performing operations of the present disclosure may be written in one or more programming languages or a combination thereof. The programming languages include, but are not limited to, object-oriented programming languages such as Java, Smalltalk, C++, and conventional procedural programming languages such as "C" language or similar programming languages. The program code may be executed entirely on a user computer, partly on the user computer, as a separate software package, partly on the user computer and partly on a remote computer, or entirely on the remote computer or a server. In the case involving a remote computer, the remote computer may be connected to the user computer through any kind of networks including an LAN or a WAN, or may be connected to an external computer (e.g., connection via the Internet through an Internet service provider).

The flowcharts and block diagrams in the drawings illustrate possible architectures, functions, and operations of systems, methods, and computer program products in multiple embodiments of the present disclosure. In this regard, each block in a flowchart or block diagram may represent a module, program segment, or part of codes. The module, program segment, or part of the codes includes one or more executable instructions for implementing a specified logical function. It is noted that in some alternative implementations, the functions noted in the blocks may also occur in an order different from that noted in the drawings. For example, two successive blocks may actually be executed substantially in parallel, and they may sometimes be executed in the reverse order, depending on the function involved. It is also noted that each block of the block diagrams and/or flowcharts, and combinations of blocks in the block diagrams and/or flowcharts, may be implemented by a dedicated hardware-based system that performs the specified functions or operations, or may be implemented by a combination of dedicated hardware and computer instructions.

The involved units described in the embodiments of the present disclosure may be implemented in a software manner or in a hardware manner. The name of the unit does not constitute limitation of the unit itself under a certain circumstance.

The functions described above herein may be performed at least in part by one or more hardware logic components. For example, non-restrictively, exemplary types of usable hardware logic components that may include a field programmable gate array (FPGA), an application specific integrated circuit (ASIC), an application specific standard product (ASSP), a system-on-chip (SOC), a complex programmable logic device (CPLD), and the like.

In the context of the present disclosure, machine-readable mediums may be tangible mediums that may contain or store programs for use by or in conjunction with a system, apparatus, or device for executing instructions. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of machine-readable storage medium may include an electrical connection based on one or more wires, a portable computer disk, a hard disk, an RAM, an ROM, an EPROM or flash memory, an optical fiber, a portable CD-ROM, an optical storage device, a magnetic storage device, or any suitable combination thereof.

There is provided a computer-readable storage medium in an embodiment of the present disclosure. The computer-readable storage medium has stored thereon a computer program that, when being executed by a processor, causes the processor to perform any method embodiment as mentioned above, the execution method and advantages of which are similar, and will not be elaborated herein again.

It should be also noted that in the present disclosure, relational terms such as "first" and "second" and the like may be used to distinguish one entity or operation from another entity or operation, without necessarily requiring or implying any actual relationship or order between such entities or operations. Moreover, the terms "including", "comprising", and any other variant thereof are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. Unless otherwise specified, an element limited by "including a/an..." does not exclude other same elements existing in the process, method, object, or device that includes the elements.

The foregoing is only specific embodiments of the present disclosure, to enable those skilled in the art to understand or implement the present disclosure. Various modifications to these embodiments will be apparent to those skilled in the art, and the general principles defined herein may be implemented in other embodiments without departing from the spirit or scope of the present disclosure. Accordingly, the present disclosure will not be limited to these embodiments described herein but will conform to the widest range consistent with the principles and novel features disclosed herein.

**Claims**

1. A method for positioning a mobile terminal, comprising:

   acquiring a ranging distance between each of a plurality of UWB anchors and the mobile terminal in a current period;

EP 4 451 758 A1

determining, according to a plurality of ranging distances, a target area where the mobile terminal is located in the current period from a plurality of preset areas; and
calculating position coordinates of the mobile terminal in the current period according to the target area where the mobile terminal is located in the current period and the ranging distance between each of the plurality of UWB anchors and the mobile terminal in the current period.

2. The method of claim 1, wherein
the plurality of preset areas are areas determined based on a vehicle, and the plurality of preset areas comprise an area outside the vehicle and an area inside the vehicle.

3. The method of claim 2, wherein

the plurality of UWB anchors comprise six UWB anchors, wherein two UWB anchors of the six UWB anchors are respectively located on a left side and a right side of a front grille of the vehicle, two UWB anchors of the six UWB anchors are respectively located on a left side and a right side of a tailgate of the vehicle, and two UWB anchors of the six UWB anchors are located in a middle area of a ceiling of the vehicle and are separately set along a length direction of a vehicle body; the area outside the vehicle comprises a front area outside the vehicle, a rear area outside the vehicle, a front-left area outside the vehicle, a rear-left area outside the vehicle, a front-right area outside the vehicle and a rear-right area outside the vehicle; and
the area inside the vehicle comprises a front-left area inside the vehicle, a front-right area inside the vehicle, a rear-left area inside the vehicle and a rear-right area inside the vehicle.

4. The method of any one of claims 1 to 3, wherein determining, according to the plurality of ranging distances, the target area where the mobile terminal is located in the current period from the plurality of preset areas comprises:

determining, according to position coordinates of the mobile terminal in a previous period, boundary demarcation data of a target area where the mobile terminal is located in the previous period, wherein the boundary demarcation data comprise a demarcation distance from each of boundary demarcation points to each of the plurality of UWB anchors; and
in response to an absolute value of a first difference value, which is between the demarcation distance from each of the boundary demarcation points to each of the plurality of UWB anchors and a ranging distance corresponding to the each UWB anchor, being greater than a set value, determining the target area of the mobile terminal in the previous period as the target area of the mobile terminal in the current period.

5. The method of claim 4, wherein the boundary demarcation data further comprises a second difference value between a reference distance from a direction reference point on one side of each of the boundary demarcation points to each of the plurality of UWB anchors and a demarcation distance from the each boundary demarcation point to the each UWB anchor; and
determining, according to the plurality of ranging distances, the target area where the mobile terminal is located in the current period from the plurality of preset areas further comprises:
in response to absolute values of all first difference values of a boundary demarcation point being smaller than the set value, determining whether a numerical relationship between a first difference value corresponding to the boundary demarcation point and zero is same as a numerical relationship between a second difference value corresponding to the boundary demarcation point and zero;

in response to all numerical relationships being same, determining a preset area where the direction reference point is located as the target area where the mobile terminal is located in the current period; and
in response to at least one numerical relationship being different from any other numerical relationship, determining a preset area on another side of the boundary demarcation point which does not comprise the direction reference point as the target area where the mobile terminal is located in the current period.

6. The method of claim 4 or 5, wherein before determining the boundary demarcation data of the target area where the mobile terminal is located in the previous period, the method further comprises:

acquiring a displacement of the mobile terminal in the current period; and
determining the set value according to the displacement of the mobile terminal in the current period.

7. The method of any one of claims 1 to 6, further comprising:

acquiring ranging distances between each of the plurality of UWB anchors and the mobile terminal in a preset previous duration, wherein the preset previous duration is a preset duration before the current period, and the preset previous duration comprises a plurality of periods;

calculating a mean value and a variance of the ranging distances corresponding to each of the plurality of UWB anchors in the preset previous duration;

selecting at least N mean values respectively corresponding to at least N UWB anchors with smallest variances, and calculating estimated position coordinates of the mobile terminal, N being an integer greater than or equal to 1;

determining a preset area corresponding to the estimated position coordinates and boundary demarcation data of the preset area according to the estimated position coordinates, wherein the boundary demarcation data comprise a demarcation distance from each of boundary demarcation points to each of the plurality of UWB anchors; and

wherein determining, according to the plurality of ranging distances, the target area where the mobile terminal is located in the current period from the plurality of preset areas comprises: determining the target area of the mobile terminal in the current period according to a demarcation distance from each of the boundary demarcation points to each of the plurality of UWB anchors and a ranging distance corresponding to the each UWB anchor in the current period.

8. The method of any one of claims 1 to 7, wherein calculating the position coordinates of the mobile terminal in the current period according to the target area where the mobile terminal is located in the current period and the ranging distance between each of the plurality of UWB anchors and the mobile terminal in the current period comprises:

determining a confidence corresponding to each of the plurality of UWB anchors in the current period according to the target area where the mobile terminal is located in the current period; and

calculating the position coordinates of the mobile terminal in the current period according to the confidence corresponding to each of the plurality of UWB anchors in the current period and the ranging distance between each of the plurality of UWB anchors and the mobile terminal in the current period.

9. The method of claim 8, wherein calculating the position coordinates of the mobile terminal in the current period according to the confidence corresponding to each of the plurality of UWB anchors in the current period and the ranging distance between each of the plurality of UWB anchors and the mobile terminal in the current period comprises:

multiplying the confidence corresponding to each of the plurality of UWB anchors by the ranging distance corresponding to the each UWB anchor in the current period, to obtain a corrected ranging distance from each of the plurality of UWB anchors to the mobile terminal in the current period;

calculating the position coordinates of the mobile terminal in the current period according to the corrected ranging distance corresponding to each of the plurality of UWB anchors and position coordinates of each of the plurality of UWB anchors.

10. The method of any one of claims 1 to 9, further comprising:

acquiring a displacement of the mobile terminal in the current period;

calculating predicted coordinates of the mobile terminal in the current period according to position coordinates of the mobile terminal in the previous period and the displacement of the mobile terminal in the current period;

wherein calculating the position coordinates of the mobile terminal in the current period according to the target area where the mobile terminal is located in the current period and the ranging distance between each of the plurality of UWB anchors and the mobile terminal in the current period comprises:

calculating measurement coordinates of the mobile terminal in the current period according to the target area where the mobile terminal is located in the current period and the ranging distance between each of the plurality of UWB anchors and the mobile terminal in the current period; and

fusing the measurement coordinates and the predicted coordinates to obtain the position coordinates of the mobile terminal in the current period.

11. The method of claim 10, wherein before fusing the measurement coordinates and the predicted coordinates to obtain the position coordinates of the mobile terminal in the current period, the method further comprises:

determining whether the measurement coordinates of the mobile terminal in the current period satisfies a set constraint condition, wherein the set constraint condition comprises: a height coordinate being within a set height coordinate range, and/or a horizontal coordinate being within a set horizontal coordinate range;

wherein fusing the measurement coordinates and the predicted coordinates to obtain the position coordinates of the mobile terminal in the current period comprises: in response to the measurement coordinates of the mobile terminal in the current period satisfying the set constraint condition, fusing the measurement coordinates and the predicted coordinates to obtain the position coordinates of the mobile terminal in the current period; and the method further comprises:

in response to the measurement coordinates of the mobile terminal in the current period not satisfying the set constraint condition, fusing the position coordinates of the mobile terminal in the previous period and the predicted coordinates to obtain the position coordinates of the mobile terminal in the current period.

12. An apparatus for positioning a mobile terminal, comprising:

a ranging distance acquisition unit, configured to acquire a ranging distance between each of a plurality of UWB anchors and the mobile terminal in a current period;

a target area determination unit, configured to determine, according to a plurality of ranging distances, a target area where the mobile terminal is located in the current period from a plurality of preset areas; and

a position coordinate calculation unit, configured to calculate a position coordinate of the mobile terminal in the current period according to the target area where the mobile terminal is located in the current period and the ranging distance between each of the plurality of UWB anchors and the mobile terminal in the current period.

13. A computer device, comprising a memory and a processor, wherein the memory stores a computer program that, when being executed by the processor, causes the processor to perform the method for positioning the mobile terminal according to any one of claims 1 to 11.

14. A computer-readable storage medium, having stored thereon a computer program that, when being executed by a processor, causes the processor to perform the method for positioning the mobile terminal according to any one of claims 1 to 11.

A ranging distance between each of a plurality of UWB anchors and a mobile terminal in a current period is acquired — S101

A target area where the mobile terminal is located in the current period is determined from a plurality of preset areas according to a plurality of ranging distances — S102

Position coordinates of the mobile terminal in the current period are calculated according to the target area where the mobile terminal is located in the current period and the ranging distance between each of the plurality of UWB anchors and the mobile terminal in the current period — S103

**FIG. 1**

Area 1 outside vehicle

Heading direction

Anchor 1    Anchor 2

Anchor 6

Area 2 outside vehicle

Area 1 inside vehicle    Area 2 inside vehicle

Area 6 outside vehicle

Anchor 5

Area 3 outside vehicle

Area 3 inside vehicle    Area 4 inside vehicle

Area 5 outside vehicle

Anchor 3    Anchor 4

Area 4 outside vehicle

**FIG. 2**

A ranging distance between each of a plurality of UWB anchors and a mobile terminal in a current period is acquired /S101

A displacement of the mobile terminal in the current period is acquired /S108

A target area where the mobile terminal is located in the current period is determined from a plurality of preset areas according to a plurality of ranging distances /S102

Predicted coordinates of the mobile terminal in the current period are calculated according to position coordinates of the mobile terminal in the previous period and the displacement of the mobile terminal in the current period /S109

Measurement coordinates of the mobile terminal in the current period are calculated according to the target area where the mobile terminal is located in the current period and the ranging distance between each of the plurality of UWB anchors and the mobile terminal in the current period /S1033 /S103

The measurement coordinates and the predicted coordinates are fused to obtain the position coordinates of the mobile terminal in the current period /S1034

**FIG. 3**

Apparatus 400 for positioning a mobile terminal

Ranging distance acquisition unit /401

Target area determination unit /402

Position coordinate calculation unit /403

**FIG. 4**

500

Processing device ⌐ 501        ROM ⌐ 502        RAM ⌐ 503

⌐ 504

I/O interface ⌐ 505

⌐ 506        ⌐ 507        ⌐ 508        ⌐ 509

Input device        Output device        Memory device        Communication device

**FIG. 5**

## INTERNATIONAL SEARCH REPORT

| | International application No. |
|---|---|
| | **PCT/CN2022/140132** |

**A. CLASSIFICATION OF SUBJECT MATTER**

H04W64/00(2009.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNPAT, CNKI, WPI, EPODOC: 区域, 车内, 车外, 车后, 车前, 测距, 距离, 位置, 坐标, 估计, 测量, 基站, 置信度, 可信度, 置信系数, 可信系数, 置信值, 可信值, 权重, 权值, 加权, estimat+, calculate+, computat+, position, coordinate, mobile, vehicle, portable, terminal, inside, outside, external, internal, UWB

**C. DOCUMENTS CONSIDERED TO BE RELEVANT**

| Category* | Citation of document, with indication, where appropriate, of the relevant passages | Relevant to claim No. |
|---|---|---|
| X | CN 103024673 A (BEIJING ZHONG CHUANG TELECOM TEST CO., LTD.) 03 April 2013 (2013-04-03) <br> description, paragraphs 0005-0217, and figures 1-3 | 1-14 |
| X | CN 107124696 A (DONGHUA UNIVERSITY) 01 September 2017 (2017-09-01) <br> description, paragraphs 0057-0103, and figures 1-5 | 1-14 |
| X | CN 111352069 A (ZHUHAI GREE ELECTRIC APPLIANCES INC.) 30 June 2020 (2020-06-30) <br> description, paragraphs 0022-0088, and figures 1-4 | 1-14 |
| A | CN 107690185 A (HISENSE GROUP CO., LTD.) 13 February 2018 (2018-02-13) <br> entire document | 1-14 |
| A | CN 109814571 A (CHANGZHOU MOBEN INTELLIGENT TECHNOLOGY CO., LTD.) 28 May 2019 (2019-05-28) <br> entire document | 1-14 |
| A | US 2021358236 A1 (DENSO CORP.) 18 November 2021 (2021-11-18) <br> entire document | 1-14 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **08 February 2023** | **20 February 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/140132**

| Patent document cited in search report | | | Publication date (day/month/year) | Patent family member(s) | | | Publication date (day/month/year) |
|---|---|---|---|---|---|---|---|
| CN | 103024673 | A | 03 April 2013 | None | | | |
| CN | 107124696 | A | 01 September 2017 | None | | | |
| CN | 111352069 | A | 30 June 2020 | None | | | |
| CN | 107690185 | A | 13 February 2018 | None | | | |
| CN | 109814571 | A | 28 May 2019 | None | | | |
| US | 2021358236 | A1 | 18 November 2021 | WO | 2020158310 | A1 | 06 August 2020 |
| | | | | JP | 2020122727 | A | 13 August 2020 |
| | | | | DE | 112020000634 | T5 | 21 October 2021 |
| | | | | CN | 113366333 | A | 07 September 2021 |

Form PCT/ISA/210 (patent family annex) (July 2022)

**EP 4 451 758 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111574469